# EUROPÄISCHE PATENTANMELDUNG

(11) **EP 3 290 109 A1**
(43) Veröffentlichungstag der Anmeldung: **07.03.2018**
(21) Anmeldenummer: 17188602.1
(22) Anmeldetag: 30.08.2017
(51) Int. Cl.: B01J 20/20, B01J 20/02, B01J 20/06, B01J 20/28, B01J 20/30, B01J 20/04, B01J 20/32, C02F 1/28, C02F 1/48, C02F 101/20, C02F 101/30

(54) **MAGNETISIERTE AKTIVKOHLEN UND VERFAHREN ZU DEREN HERSTELLUNG**

(30) Priorität: 01.09.2016 DE 102016216589
(71) Anmelder: Fraunhofer-Gesellschaft zur Förderung der angewandten Forschung e.V., 80686 München (DE)
(72) Erfinder: SAADAT, Reza, 49076 Osnabrück (DE)
(74) Vertreter: Pfenning, Meinig & Partner mbB

(57) **Zusammenfassung**

Die vorliegende Erfindung betrifft Verfahren zur Herstellung von magnetisierten Aktivkohlen, welches die folgenden Schritte umfasst: a) Bereitstellen von Aktivkohle; b) Bereitstellen von magnetischen Nanopartikeln; c) Erstellen eines Verbunds der in den Schritten a) und b) bereitgestellten Komponenten, wobei magnetisierte Aktivkohle erhalten wird. Weiterhin betrifft die Erfindung magnetisierte Aktivkohlen und deren Verwendung zur Entfernung von Schadstoffen aus Wasser.

## Beschreibung

Die vorliegende Erfindung betrifft magnetisierte Aktivkohlen, Verfahren zu deren Herstellung und deren Verwendung zur Adsorption von Schadstoffen aus Wasser.

Ein vorrangiges Ziel der Wasserwirtschaft ist die Reduzierung der Arzneimittel- und Mikroschadstoffbelastung von Gewässern. Drei Prozesse stellen zur Zeit die effektivsten Eliminierungsmethoden von Mikroschadstoffen dar:
- Die Verflüchtigung in Belüftungszonen, deren Umfang von der Belüftungsintensität, der Volatilität der Schadstoffe und der Temperatur abhängt.
- Die Sorption durch Anlagerung an Feststoffen im Abwasser. Zur Entfernung der Schadstoffe aus dem Abwasser müssen die Feststoffe abgetrennt werden.
- Der biochemische Abbau durch Mikroorganismen im Belebungsbecken.

Aktuell können kommunale Abwasserreinigungsanlagen Mikroverunreinigungen durch die vorhandenen mechanisch-biologischen Reinigungsstufen aus Abwässern nur mangelhaft entfernen, so dass diese kontinuierlich in die Gewässer eingetragen werden. Um diesen Eintrag aus dem kommunalen Abwasser deutlich zu senken, bedarf es einer erweiterten Reinigung des Wassers mit Hilfe neuer Verfahrenstechniken.

Als effektivste Methode zur Entfernung von Mikroschadstoffen wird die Adsorption angesehen. Adsorptive Reinigungsverfahren beruhen auf der Adsorption von Mikroschadstoffen an der Oberfläche des Adsorbers. Als wirkungsvoller Adsorber hat sich Aktivkohle erwiesen. Es wurden in den letzten Jahren zahlreiche Untersuchungen bezüglich alternativer Methoden für die Aktivkohleadsorption unter Verwendung von preiswerten, natürlichen Materialien durchgeführt. Pflanzliche Materialien wurden dabei als günstige Adsorptionsmittel zur Entfernung von Mikroschadstoffen in den Fokus gerückt. Jedoch stellte sich die Abtrennung als problematisch und für größere Abwasseraufbereitungsanlagen noch zu teuer dar, da sich die Filtration oft als zu langsam und unvollständig erwies und eine nötige Verkohlung des Biomaterials zu Bioaktivkohle ebenfalls kostenintensiv und energieaufwendig ist.

WO 2015/066816 A1 betrifft ein Verfahren zur Herstellung von hochporösen auf Birken-basierten Aktivkohlen, beinhaltend die Schritte: Bereitstellen von rindenfreien, getrockneten Hartholz Birkenspänen, Unterziehen dieser Späne eines Pyrolyse-Verfahrens bei Temperaturen von etwa 250 bis etwa 1 000°C, um ein vollständig verkohltes Produkt zu erhalten und Unterwerfen des vollständig verkohlten Produkts eines Abkühlprozesses unter Ausschluss von Sauerstoff, um die Temperatur des vollständig verkohlten Produkts rasch zu senken. Pestizide und Schwermetalle wurden durch die so hergestellte Aktivkohle adsorbiert, womit die Wasserqualität verbessert werden konnte.

US 2009/0220767 A1 beschreibt Kohlenstoff-Kohlenstoff Komposite umfassend einen Kohlenstoff-haltigen Träger und Kohlenstoffstrukturen im Nanogrößenbereich, wobei die Kohlenstoffstrukturen im Nanogrößenbereich auf dem Kohlenstoff-haltigen Träger gezüchtet werden. Der Träger kann porös sein, wie Aktivkohle oder besteht aus Rußteilchen. Die Kohlenstoff-Kohlenstoff Komposite finden Verwendung zur Reinigung von Wasser.

Um die Abtrennung von Aktivkohlen aus dem gereinigten Wasser zu vereinfachen wurden Aktivkohlen mit magnetischen Materialien modifiziert.

US 2015/0336081 A1 betrifft ein magnetisches Adsorbens, enthaltend ein Adsorbens und Eisenoxid auf der Oberfläche dieses Adsorbens, wobei die gesamte Oberfläche des magnetischen Adsorbens nicht wesentlich kleiner ist als die gesamte Oberfläche des Adsorbens. Als bevorzugtes Adsorbens wird Aktivkohle genannt.

Problematisch dabei ist aber, dass die magnetischen Materialien einen großen Teil der Oberfläche des Adsorbtionsmittels blockieren und damit dessen Aktivität signifikant mindern. Weiterhin tritt bei der Umsetzung von magnetischen Materialien mit Adsorbtionsmitteln zu einem Verbund oft ein Verlust der eingesetzten Materialien auf.

Ausgehend davon war es Aufgabe der vorliegenden Erfindung modifizierte Adsorptionsmittel zur Schadstoffentfernung aus Wasser bereitzustellen, die nach dem Einsatz, also nach erfolgter Adsorption der Schadstoffe, auch einfach und vollständig wieder aus dem gereinigten Wasser entfernt werden können. Weiterhin sollen diese modifizierten Adsorptionsmittel einfach und günstig herzustellen sein und keine verminderte Aktivität gegenüber Adsorptionsmitteln aufweisen, die sich lediglich durch die Modifizierung unterscheiden. Eine weitere Aufgabe besteht in der Bereitstellung eines Verfahrens zur Herstellung dieser Adsorptionsmittel bei dem kein oder zumindest nur ein sehr geringer Verlust der verwendeten Ausgangsmaterialien erfolgt. Eine Teilaufgabe besteht in der Bereitstellung universell einsetzbarer Adsorptionsmittel, d.h. von Adsorptionsmitteln die in der Lage sind verschiedenste anorganische und organische Schadstoffe zu entfernen.

Diese Aufgabe wird durch das Verfahren mit den Merkmalen des Anspruchs 1 und durch die magnetisierten Aktivkohlen gemäß Anspruch 8 gelöst.

Erfindungsgemäß wird ein Verfahren zur Herstellung von magnetisierten AKtivkohlen bereitgestellt, welches die folgenden Schritte umfasst:
a) Bereitstellen von Aktivkohle;
b) Bereitstellen von magnetischen Nanopartikeln;
c) Erstellen eines Verbunds der in den Schritten a) und b) bereitgestellten Komponenten, wobei magnetisierte Aktivkohle erhalten wird.

Vorteilhafte Ausführungsformen dieses Verfahrens werden in den abhängigen Patentansprüchen 2 bis 7 angegeben.

Weiterhin werden gemäß der vorliegenden Erfindung magnetisierte Aktivkohlen bereitgestellt, die die folgenden Komponenten enthalten:
(A) 65 bis 93 Gew.-% Aktivkohle;
(B) 7 bis 35 Gew.-% magnetischer Nanopartikel;
   wobei sich die Gewichtsanteile der Komponenten (A) und (B) auf 100 Gew.-% ergänzen.

Vorteilhafte Ausführungsformen dieser magnetisierten Aktivkohlen werden in den Ansprüchen 9 bis 12 angeben.

Außerdem bestrifft die vorliegende Erfindung die Verwendung der magnetisierten Aktivkohlen zur Adsorption von Schadstoffen aus Wasser. Bevorzugte Verwendungen der magnetisierten Aktivkohlen werden in den abhängigen Ansprüchen 14 und 15 angegeben.

Unter "magnetisiert" wird gemäß der vorliegenden Erfindung verstanden, dass die Aktivkohle eine Magnetisierung von zumindest 3 emu/g aufweist, vorzugsweise bestimmt mittels eines Vibrationsmagnetometers wie im experimentellen Teil angegeben.

"Nanopartikel" im Sinne der vorliegenden Erfindung sind Partikel mit einem Partikeldurchmesser *d*₅₀ im Bereich von 1 bis 100 nm, vorzugsweise bestimmt mittels Rasterelektronenmikroskopie wie im experimentellen Teil angegeben.

Unter einem "Verbund" wird im Sinne der vorliegenden Erfindung eine feste Verbindung zwischen der Aktivkohle und den magnetischen Nanopartikeln verstanden. Diese kann durch chemische und/oder physikalische Bindungen ausgebildet werden. Ein "Verbund" unterscheidet sich von einer Mischung, bei der sich die Komponenten z.B. durch Segregation trennen lassen.

Der Begriff "Co-Vermahlen" im Sinne der folgenden Verbindung meint das zumindest zwei Komponenten zur gleichen Zeit in der gleichen Mühle vermahlen werden.

Prinzipiell eignen sich alle Aktivkohlen als Ausgangsmaterial zur Herstellung der magnetisierten Aktivkohlen gemäß der vorliegenden Erfindung.

Gemäß einer bevorzugten Ausführungsform der vorliegenden Erfindung weisen die in Schritt a) bereitgestellten Aktivkohlen eine BET-Oberfläche im Bereich von 600 bis 1 300 m²/g, vorzugsweise 800 bis 1 200 m²/g und insbesondere bevorzugt 1050 bis 1150 m²/g auf.

Nach einer anderen Ausführungsform der vorliegenden Erfindung weisen die in Schritt a) bereitgestellten Aktivkohlen eine Iodzahl im Bereich von 800 bis 1500 mg/g, vorzugsweise 900 bis 1300 mg/g und insbesondere bevorzugt 1000 bis 1 200 mg/g auf.

Eine andere Ausführungsform vorliegender Erfindung sieht vor, dass die in Schritt a) bereitgestellten Aktivkohlen einen Korndurchmesser von 1 bis 8 mm, bevorzugt, 2 bis 7 mm und insbesondere bevorzugt 3 bis 5 mm aufweisen.

Eine weitere Ausführungsform der vorliegende Erfindung sieht vor, dass die in Schritt a) bereitgestellten Aktivkohlen eine Methylenblau-Adsorption von 10 bis 50 g Methylenblau / 100 g Aktivkohle, bevorzugt 15 bis 40 g Methylenblau / 100 g Aktivkohle und insbesondere bevorzugt 20 bis 30 g Methylenblau / 100 Aktivkohle aufweisen.

Als magnetische Nanopartikel sind für die vorliegende Erfindung sowohl kommerzielle verfügbare magnetische Nanopartikel, als auch eigens zur Ausführung der Erfindung hergestellte Nanopartikel geeignet. Nach einer bevorzugten Ausführungsform der vorliegenden Erfindung sind die in Schritt b) bereitgestellten Nanopartikel ausgewählt aus der Gruppe bestehend aus Magnetit, Maghemit, gemischten Eisenoxiden bei denen Eisen teilweise durch andere Metalle, vorzugsweise durch Magnesium, ersetzt ist und Mischungen daraus. Magnetit weist unter den natürlich vorkommenden Mineralien die stärksten magnetischen Eigenschaften auf und ist besonders bevorzugt.

Eine besonders bevorzugte Kombination aus Aktivkohlen und magnetischen Nanopartikeln stellen Aktivkohlen dar die
- eine BET-Oberfläche im Bereich von 600 bis 1 300 m²/g, vorzugsweise 800 bis 1 200 m²/g und insbesondere bevorzugt 1050 bis 1150 m²/g aufweisen; und/oder
- eine Iodzahl im Bereich von 800 bis 1500 mg/g, vorzugsweise 900 bis 1300 mg/g und insbesondere bevorzugt 1 000 bis 1 200 mg/g aufweisen; und/oder
- einen Korndurchmesser von 1 bis 8 mm, bevorzugt, 2 bis 7 mm und insbesondere bevorzugt 3 bis 5 mm aufweisen; und/oder
- eine Methylenblau-Adsorption von 10 bis 50 g Methylenblau / 100 g Aktivkohle, bevorzugt 15 g bis 40 Methylenblau / 100 g Aktivkohle und insbesondere bevorzugt 20 g bis 30 Methylenblau / 100 Aktivkohle aufweisen;
und Magnetit dar.

Die magnetisierten Aktivkohlen, bestehen bevorzugt aus:
(A) 65 bis 93 Gew.-% Aktivkohle;
(B) 7 bis 25 Gew.-% magnetischer Nanopartikel;
(C) 0 bis 10 Gew.-% Additive,
   wobei sich die Gewichtsanteile der Komponenten (A), (B) und (C) auf 100 Gew.-% ergänzen.

Als Additive werden im Sinne der vorliegenden Erfindung z.B. Verarbeitungshilfsmittel verstanden. Der Zusatz von Verarbeitungsmitteln oder sonstigen Additiven ist aber in keiner Weise essentiell zur Herstellung der erfindungsgemäßen magnetisierten Aktivkohlen.

Nach einer anderen bevorzugten Ausführungsform der vorliegenden Erfindung weisen die magnetisierten Aktivkohlen die folgende Zusammensetzung auf:
(A) 80 bis 90 Gew.-% Aktivkohle;
(B) 10 bis 15 Gew.-% magnetischer Nanopartikel;
(C) 0 bis 5 Gew.-% Additive,
   wobei sich die Gewichtsanteile der Komponenten (A), (B) und (C) auf 100 Gew.-% ergänzen.

Gemäß einer weiteren Ausführungsform der vorliegenden Erfindung weisen die magnetisierten Aktivkohlen eine BET-Oberfläche im Bereich von 600 bis 1 300 m²/g, vorzugsweise 800 bis 1 200 m²/g und insbesondere bevorzugt 1050 bis 1150 m²/g, vorzugsweise bestimmt wie im experimentellen Teil angegeben, auf.

Nach einer anderen Ausführungsform der vorliegenden Erfindung weisen die magnetisierten Aktivkohlen eine Magnetisierung von 5 bis 50 emu/g, vorzugsweise 6 bis 20 emu/g und insbesondere bevorzugt 7 bis 10 emu/g auf, vorzugsweise bestimmt auf einem Vibrationsmagnetometer wie im experimentellen Teil angegeben.

Gemäß einer weiteren Ausführungsform der vorliegenden Erfindung weisen die magnetisierten Aktivkohlen eine Iodzahl im Bereich von 800 bis 1 500 mg/g, vorzugsweise 900 bis 1300 mg/g und insbesondere bevorzugt 1 000 bis 1200 mg/g auf.

Eine weitere Ausführungsform der vorliegenden Erfindung sieht vor, dass die magnetisierten Aktivkohlen einen Korndurchmesser von 1 bis 8 mm, bevorzugt, 2 bis 7 mm und insbesondere bevorzugt 3 bis 5 mm aufweisen.

Nach einer weiteren Ausführform der vorliegenden Erfindung weisen die magnetisierten Aktivkohlen eine Methylenblau-Adsorption von 10 g bis 50 g Methylenblau / 100 g Aktivkohle, bevorzugt 15 g bis 40 g Methylenblau / 100 g Aktivkohle und insbesondere bevorzugt 20 g bis 30 g Methylenblau / 100 Aktivkohle auf.

Gemäß einer anderen bevorzugten Ausführungsform der vorliegenden Erfindung wird der Verbund in Schritt c) durch Co-Vermahlen der Aktivkohle gemäß Schritt a) in Gegenwart der magnetischen Nanopartikel gemäß Schritt b) erzeugt. Das Massenverhältnis zwischen den magnetischen Nanopartikeln und der Aktivkohle beträgt dabei bevorzugt von 1:4 bis 1:15 und insbesondere bevorzugt von 1:9 bis 1:11 und ist am meisten bevorzugt 1:10.

Nach einer anderen Ausführungsform der vorliegenden Erfindung wird die Co-Vermahlung gemäß Schritt c) in einer Mühle ausgewählt aus der Gruppe bestehend aus Kugelmühlen, insbesondere Schwingmühlen, Trommelmühlen, Planetenkugelmühlen, Scheibenmühlen, insbesondere Scheibenschwingmühlen durchgeführt. Es wird dabei vorzugsweise co-vermahlen bis die magnetisierten Aktivkohlen einen *d*₅₀ von 1 bis 300 µm, besonders bevorzugt 10 bis 100 µm aufweisen.

Gemäß einer weiteren Ausführungsform der vorliegenden Erfindung wird der Verbund in Schritt c) durch Ausfällung der in Schritt b) bereitgestellten Nanopartikel auf der Oberfläche der Aktivkohle erzeugt.

Die Ausfällung kann dabei beispielsweise erfolgen wie im Journal of Colloid and Interface Science, 2010, Volume 349, Seiten 293 bis 299, oder in Small 2008, 4, No. 1, Seiten 143 bis 153, beschrieben.

Die vorliegende Erfindung betrifft weiterhin die magnetisierten Aktivkohlen herstellbar gemäß den erfindungsgemäßen Verfahren.

Außerdem betrifft die vorliegende Erfindung die Verwendung der magnetisierten Aktivkohlen zur Adsorption von Schadstoffen aus Wasser.

Nach einer bevorzugten Ausführungsform der vorliegenden Erfindung werden die magnetisierten Aktivkohlen verwendet um anorganische Schadstoffe, insbesondere um positiv geladene Metallionen ausgewählt aus der Gruppe bestehend aus Aluminiumsalzen, Bleisalzen, Mangansalzen, Kupfersalzen, Eisensalzen, Quecksilbersalzen und Mischungen daraus zu adsorbieren.

Eine weitere bevorzugte Ausführungsform der vorliegenden Erfindung sieht die Verwendung der magnetisierten Aktivkohle zur Adsorption von polaren, organischen Schadstoffen, insbesondere ausgewählt aus der Gruppe bestehend aus Medikamenten und deren Metaboliten und Mischungen daraus, vor. Bevorzugte Medikamente sind dabei Acetylsalicylsäure und Ibuprofen.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Verwendete Messgeräte und Messmethoden

### ICP-OES

Die ICP-OES Untersuchungen wurden auf einem Optima 8300 von Perkin EImer durchgeführt, die Auswertung erfolgte mit der Software WinLab32.

### HPLC

Die HPLC-Analysen wurden auf einem AZURA Kompakt der Firma Knauer durchgeführt, die Auswertung erfolgte mit der Software Clarity Crom.

### Rasterelektronenmikroskopie

Die Rasterlelektronenmikroskopaufnahmen wurden auf einem Crossbeam 450 der Carl Zeiss Microscopy GmbH durchgeführt, es wurde dabei die Software SmartSEM verwendet.

### BET-Messungen

Die BET-Messungen erfolgten auf einem 3 Flex Oberflächenanalysator der Firma Micromeritics mittels Physisorption, dabei wurde die Software 3 Flex betrieben.

### Messung der Magnetisierung

Die Messung der Magnetisierung erfolgte auf einem Cryogene Vibrating Sample Magnetometer, Modell VersalabTM 3T.

### 2 Ausgangsmaterialien

Für die Versuche wurden die Chemikalien und Materialien gemäß Tabelle 1 verwendet.

**Tabelle 1: Chemikalien und Materialien.**

| Chemikalien/Materialien | Anbieter |
|---|---|
| Aktivkohle (HSC40) | Hartron Anlagentechnik GmbH |
| Aluminiumchlorid (AlCl₃) | Carl Roth GmbH + Co. KG |
| Acetylsalicylsäure | Sigma Aldrich |
| Ibuprofen | Sigma Aldrich |
| Magnetit-Nanopartikel | vom Anmelder hergestellt^{a)} |

| | |
|---|---|
| a) Hergestellt nach Saadat, R., Renz, F., Simultaneous cancer control and diagnosis with magnetic nanohybrid materials, Beilstein J. Nanotech, 7, 121-125, 2016. | |

### 3 Herstellung magnetisierter Aktivkohle

2 g der Aktivkohle (HSC40) und 0,2 g Magnetit-Nanopartikel wurden in den Schwingbecher einer Schwingmühle (Typ: MM 400, Retsch) gefüllt (Schwingkugel Größe 20,0 mm) und bei einer Frequenz von 30 Hz für 20 Sekunden gemahlen, wonach ein Verbund entstanden war und magnetisierte Aktivkohle erhalten wurden.

### 4 Adsorption von Aluminiumionen, Acetylsalicylsäure und Ibuprofen

Das Aluminiumsalz, Acetylsalicylsäure sowie Ibuprofen gemäß Tabelle 1 wurden in je einem Zentrifugenröhrchen (Volumen 50 mL, Fisherbrand) vorgelegt und mit deionisiertem Wasser auf 50 mL aufgefüllt und schließlich durch Schütteln, oder falls nötig durch Zuhilfenahme eines Ultraschallbads, gelöst. Die Ausgangskonzentration der Lösungen kann den Tabellen 2 bis 5 entnommen werden. Anschließend wurden je 2.5 mL der erhaltenen Lösungen mit einer Spritze in Schnappdeckelgläser überführt und je 0.5 g der wie unter 3 beschrieben hergestellten magnetisierten Aktivkohle oder 0.5 g der Aktivkohle aus Tabelle 1 ohne magnetische Nanopartikel zugesetzt. Die erhaltenen Mischungen wurden in einem Intelli-Mixer (Typ: RM-2S von ELMI) geschüttelt (Einstellung Mode C1, 60 Umdrehungen pro Minute). Während des Schüttelvorgangs wurde zu den in den Tabellen 2 bis 5 angegebenen Zeiten Proben entnommen und diese mittels optischer Emissionsspektrometrie, mit induktiv gekoppeltem Licht/Plasma (ICP-OES), für die Aluminiumsalze, und Hochleistungsflüssigkeitschromatographie, für Acetylsalicylsäure und Ibuprofen, analysiert.

**Tabelle 2: Adsorption von Aluminiumionen mit magnetisierter Aktivkohle.**

| t [min] | c_{(Al3+)} [mg/L] |
|---|---|
| 0 | 9,4 |
| 10 | 5,3 |
| 30 | 4,9 |

**Tabelle 3: Adsorption von Aluminiumionen mit Aktivkohle.**

| t [min] | c_{(Al3+)} [mg/L] |
|---|---|
| 0 | 9,3 |
| 10 | 5,0 |
| 30 | 4,7 |

Dem Vergleich der Tabellen 2 und 3 kann entnommen werden, dass die magnetischen Nanopartikel die Adsorptionseigenschaften der verwendeten Aktivkohle für anorganische Salze nicht beeinträchtigen. Bereits nach 30 Minuten wurde die Konzentration an Aluminiumionen im Wasser durch die erfindungsgemäßen Aktivkohlen nahezu halbiert.

**Tabelle 4: Adsorption von Acetylsalicylsäure (ASS) und Ibuprofen (Ibu) mit magnetisierter Aktivkohle.**

| t [min] | C_{(ASS)} [mg/L] | C_{(Ibu)} [mg/L] |
|---|---|---|
| 0 | 9,6 | 8,4 |
| 10 | 3,5 | 0 |
| 30 | 3,3 | 0 |

**Tabelle 5: Adsorption von Acetylsalicylsäure (ASS) und Ibuprofen (Ibu) mit magnetisierter Aktivkohle.**

| t [min] | C_{(ASS)} [mg/L] | C_{(Ibu)} [mg/L] |
|---|---|---|
| 0 | 9,8 | 8,6 |
| 10 | 3,4 | 0 |
| 30 | 3,2 | 0 |

Dem Vergleich der Tabellen 4 und 5 kann entnommen werden, dass die magnetischen Nanopartikel die Adsorptionseigenschaften der verwendeten Aktivkohle für polare organische Salze nicht beeinträchtigen. Tabelle 4 kann entnommen werden, dass die Konzentration an Acetylsalicylsäure im durch die erfindungsgemäßen magnetisierten Aktivkohlen 30 Minuten nur noch ein Drittel der Ausgangskonzentration betrug. Für Ibuprofen wurde durch die erfindungsgemäße Aktivkohle bereits nach 10 Minuten eine komplette Adsorption beobachtet.

### 5 Rasterelektronenmikroskopuntersuchungen

In 2 Bechergläser wurden je 0,5 g der wie oben beschrieben hergestellten magnetisierten Aktivkohlen (vor Adsorption und nach Adsorption von Al³⁺) gegeben und mit 250 mL deionisiertem. Wasser aufgefüllt. Anschließend wurden die Mischungen für 24 Stunden mit einem KPG-Rührer durchmischt. Nach 24 Stunden des Rührvorgangs wurden Proben entnommen. Hierfür wurden 2,5 mL in eine Spritze aufgezogen und in ein Schnappdeckelglas überführt. Dann wurde ein Magnet an das Schnappdeckelglas gehalten, sodass die magnetisierte Akivkohle von ihm angezogen wurde und die Flüssigkeit abgeschüttet werden konnte. Danach wurden die Gläser für ein paar Stunden offen stehen gelassen, damit die restliche Flüssigkeit entweichen konnte und sich nur noch modifizierte Aktivkohle in den Gläsern befanden. Anschließend wurden die Proben mittels Rasterelektronenmikroskopie analysiert, die Aufnahmen werden in den Figuren 1 und 2 gezeigt.
**Figur 1** zeigt einen Verbund aus Aktivkohle und magnetischen Nanopartikeln vor der Absorption von Schadstoffen. Die linke und die rechte Aufnahme unterscheiden sich nur bezüglich des Kontrasts. Die magnetischen Nanopartikel sind homogen auf der Oberfläche der Aktivkohle verteilt.
**Figur 2** zeigt einen Verbund aus Aktivkohle und magnetischen Nanopartikeln nach 24 h Adsorption von Aluminium (bei pH 7 und 25°C). Die linke und die rechte Aufnahme unterscheiden sich nur bezüglich des Kontrasts.

## Patentansprüche

1. Verfahren zur Herstellung von magnetisierter Aktivkohle, umfassend die folgenden Schritte:
a) Bereitstellen von Aktivkohle;
b) Bereitstellen von magnetischen Nanopartikeln;
c) Erstellen eines Verbunds der in den Schritten a) und b) bereitgestellten Komponenten, wobei magnetisierte Aktivkohle erhalten wird.

2. Verfahren nach Anspruch 1, **dadurch gekennzeichnet, dass** die in Schritt a) bereitgestellte Aktivkohle
• eine BET-Oberfläche im Bereich von 600 bis 1 300 m²/g, vorzugsweise 800 bis 1 200 m²/g und insbesondere bevorzugt 1050 bis 1150 m²/g aufweist; und/oder
• eine Iodzahl im Bereich von 800 bis 1 500 mg/g, vorzugsweise 900 bis 1300 mg/g und insbesondere bevorzugt 1 000 bis 1 200 mg/g aufweist; und/oder
• einen Korndurchmesser von 1 bis 8 mm, bevorzugt, 2 bis 7 mm und insbesondere bevorzugt 3 bis 5 mm aufweist; und/oder
• eine Methylenblau-Adsorption von 10 bis 50 g Methylenblau / 100 g Aktivkohle, bevorzugt 15 bis 40 g Methylenblau / 100 g Aktivkohle und insbesondere bevorzugt 20 bis 30 g Methylenblau / 100 Aktivkohle aufweist.

3. Verfahren nach Anspruch 1 oder 2, **dadurch gekennzeichnet, dass** die in Schritt b) bereitgestellten magnetischen Nanopartikel ausgewählt sind aus der Gruppe bestehend aus Magnetit, Maghemit, gemischten Eisenoxiden bei denen Eisen teilweise durch andere Metalle, vorzugsweise durch Magnesium, ersetzt ist und Mischungen daraus.

4. Verfahren nach einem der vorherigen Ansprüche, **dadurch gekennzeichnet, dass** es sich bei der in Schritt a) bereitgestellten Aktivkohle um eine Aktivkohle handelt, die
• eine BET-Oberfläche im Bereich von 600 bis 1 300 m²/g, vorzugsweise 800 bis 1 200 m²/g und insbesondere bevorzugt 1050 bis 1150 m²/g aufweist; und/oder
• eine Iodzahl im Bereich von 800 bis 1500 mg/g, vorzugsweise 900 bis 1300 mg/g und insbesondere bevorzugt 1 000 bis 1 200 mg/g aufweist; und/oder
• einen Korndurchmesser von 1 bis 8 mm, bevorzugt, 2 bis 7 mm und insbesondere bevorzugt 3 bis 5 mm aufweist; und/oder
• eine Methylenblau-Adsorption von 10 bis 50 g Methylenblau / 100 g Aktivkohle, bevorzugt 15 g bis 40 Methylenblau / 100 g Aktivkohle und insbesondere bevorzugt 20 g bis 30 Methylenblau / 100 Aktivkohle aufweist;
und dass es sich bei den in Schritt b) bereitgestellten magnetischen Nanopartikeln um Magnetit handelt.

5. Verfahren nach einem der vorherigen Ansprüche, **dadurch gekennzeichnet, dass** der Verbund in Schritt c) durch Co-Vermahlen der Aktivkohle gemäß Schritt a) in Gegenwart der magnetischen Nanopartikel gemäß Schritt b) erzeugt wird, das Massenverhältnis zwischen den magnetischen Nanopartikeln und der Aktivkohle beträgt dabei bevorzugt von 1:4 bis 1:15 und insbesondere bevorzugt von 1:9 bis 1:11 und ist am meisten bevorzugt 1:10.

6. Verfahren nach Anspruch 5, **dadurch gekennzeichnet, dass**
die Co-Vermahlung in einer Mühle ausgewählt aus der Gruppe bestehend aus Kugelmühlen, insbesondere Schwingmühlen, Trommelmühlen, Planetenkugelmühlen, Scheibenmühlen, insbesondere Scheibenschwingmühlen durchgeführt wird; und/oder
co-vermahlen wird bis die magnetisierte Aktivkohle einen *d*₅₀ von 1 bis 300 µm und bevorzugt 10 bis 100 µm aufweist.

7. Verfahren nach einem der Ansprüche 1 bis 4, **dadurch gekennzeichnet, dass** der Verbund in Schritt c) durch Ausfällung der in Schritt b) bereitgestellten magnetischen Nanopartikel auf der Oberfläche der Aktivkohle aus Schritt a) erzeugt wird.

8. Magnetisierte Aktivkohle, enthaltend:
(A) 65 bis 93 Gew.-% Aktivkohle;
(B) 7 bis 35 Gew.-% magnetischen Nanopartikeln;
wobei sich die Gewichtsanteile der Komponenten (A) und (B) auf 100 Gew.-% ergänzen.

9. Magnetisierte Aktivkohle gemäß Anspruch 8, **dadurch gekennzeichnet, dass**,
diese diese aus den folgenden Komponenten besteht:
65 bis 93 Gew.-%, bevorzugt 80 bis 90 Gew.-% Aktivkohle;
7 bis 25 Gew.-%, bevorzugt 10 bis 15 Gew.-% magnetischer Nanopartikeln;
0 bis 10 Gew.-%, bevorzugt 0 bis 5 Gew.-% Additive,
wobei sich die Gewichtsanteile der Komponenten (A), (B) und (C) auf 100 Gew.-% ergänzen.

10. Magnetisierte Aktivkohle, gemäß Anspruch 8 oder 9, **dadurch gekennzeichnet, dass** die magnetischen Nanopartikel ausgewählt sind aus der Gruppe bestehend aus Magnetit, Maghemit, gemischten Eisenoxiden bei denen Eisen teilweise durch andere Metalle, vorzugsweise Magnesium, ersetzt ist und Mischungen daraus.

11. Magnetisierte Aktivkohle, gemäß einem der Ansprüche 8 bis 10, **dadurch gekennzeichnet, dass** diese eine BET-Oberfläche im Bereich von 600 bis 1 300 m²/g, vorzugsweise 800 bis 1 200 m²/g und insbesondere bevorzugt 1050 bis 1150 m²/g, bestimmt auf einem Oberflächenanalyssator mittels Physisorption, aufweisen.

12. Magnetisierte Aktivkohle, gemäß einem der Ansprüche 8 bis 11, **dadurch gekennzeichnet, dass** diese eine Magnetisierung von 5 bis 50 emu/g, vorzugsweise 6 bis 20 emu/g und insbesondere bevorzugt 7 bis 10 emu/g, bestimmt mittels eines Vibrationsmagnetometers, aufweisen.

13. Verwendung der magnetisierten Aktivkohle gemäß einem der Ansprüche 8 bis 12 oder hergestellt nach einem Verfahren gemäß einem der Ansprüche 1 bis 7 zur Adsorption von Schadstoffen aus Wasser.

14. Verwendung gemäß Anspruch 13, **dadurch gekennzeichnet, dass** es sich um anorganische Schadstoffe, insbesondere um positiv geladene Metallionen ausgewählt aus der Gruppe bestehend aus Aluminiumsalzen, Bleisalzen, Mangansalzen, Kupfersalzen, Eisensalzen, Quecksilbersalzen und Mischungen daraus handelt.

15. Verwendung gemäß Anspruch 13, **dadurch gekennzeichnet, dass** es sich um polare organische Schadstoffe, insbesondere ausgewählt aus der Gruppe bestehend aus Medikamenten und deren Metaboliten und Mischungen daraus handelt.
